# EUROPEAN PATENT APPLICATION

(11) **EP 1 840 609 A1**
(43) Date of publication of application: **03.10.2007**
(21) Application number: 07006736.8
(22) Date of filing: 30.03.2007
(51) Int. Cl.: G02B 6/36

(54) **Optical fiber coil and production method therefor**

(30) Priority: 30.03.2006 JP 2006094374; 10.10.2006 JP 2006275971
(71) Applicant: Tomoegawa Co., Ltd., Tokyo (JP)
(72) Inventor: Suzuki, Masayoshi c/o Tomoegawa Co.,Ltd., Shizuoka-shi Shizuoka 421-0192 (JP); Sasaki, Kyoichi, Shizuoka-shi Shizuoka 421-0192 (JP)
(74) Representative: Nöth, Heinz

(57) **Abstract**

An optical fiber coil and a production method therefor make it unnecessary for spaces between single fibers to be widened and for stress to be applied to the single fibers, and in which time and economic costs are low. In the optical fiber coil, an optical fiber ribbon is formed by arranging in parallel plural of single fibers and by integrally covering the single fibers with a covering portion, and ends of the ribbon are connected so that an end of at least one single fiber is connected to an end of another single fiber.

## Description

### BACKGROUND OF THE INVENTION

### Field of the Invention

The present invention relates to an optical fiber coil which can be used in a fiber gyro, sensor, optical amplifier, laser, dispersion compensator, nonlinear optical device, delay circuit, dummy circuit, other parts employing long optical fibers, extra long handling tool, etc., and which can be used to conserve space and have low tension, and the present invention also relates to a production method for the optical fiber coil.

### Description of Related Art

Optical fiber type devices that employ optical fibers therein are widely employed in, for example, sensors. In addition, such optical fiber type devices have attracted attention in optical fiber amplifiers which are doped with erbium, thulium, praseodymium, etc., dispersion compensators using dispersion-compensated optical fiber, and nonlinear optical devices.

It is known that the optical fiber type device is a superior device, that its connectivity with transmission paths or other devices is superior, that it is less likely to be affected by external noise, and that it has stable characteristics, since it is constituted by the optical fiber.

However, it is disadvantageous in that the optical fiber is bulky when the desired length thereof is long. In order to avoid this problem, an optical fiber coil which is wound around a small bobbin, etc., can be used.

As a general production method for the optical fiber coil, initially, in a first process, an adhesive is applied to a part or the entirety of the surface of one long single fiber to form an adhesive layer. The adhesive layer is provided on at least part of the surface of the single fiber, so that proximate optical fibers are adhered and fixed to each other when the single fiber is wound in a coiled state.

In a subsequent process, the single fiber provided with the adhesive layer is wound in a coiled state around a bobbin having a desired diameter, using a coil winding device. At this time, in order to make the coil as compact as possible by minimizing spaces between the single fibers, the single fiber is wound under conditions in which stress is applied thereto.

Then, the adhesive layer is dried or cured using a suitable method, and an optical fiber coil having desired winding diameter, winding width, and winding length, can be produced (see Japanese Unexamined Patent Application Publication No. 2003-107250).

However, there are problems in the above conventional production method for an optical fiber coil.

That is, in the case in which the single fiber is wound in a coiled state without further widening spaces between the single fibers and further applying stress to the single fibers, time and economic costs are high because of the need for adjustment thereof, or the like.

Here, in the case in which stress is further applied to the single fibers, optical transmission loss occurs.

### SUMMARY OF THE INVENTION

The present invention was completed by considering the above problems, and objects thereof are to provide an optical fiber coil and a production method therefor, in which it is not necessary that spaces between single fibers be further widened and that stress be further applied to the single fibers, and in which time and economic costs are low.

The present invention solves the above problems by the following technical constructions.
(1) An optical fiber coil of the present invention has an optical fiber ribbon formed by arranging in parallel plural of single fibers and by integrally covering them with a covering portion, and ends of the ribbon are connected, so that an end of at least one single fiber is connected to an end of another single fiber.
(2) An optical fiber coil of the present invention has an optical fiber ribbon formed by arranging in parallel plural of single fibers f1, f2, f3, ..., and fn in this order and by integrally covering them with a covering portion, and ends of the ribbon are connected, so that single fibers f1 and f2, single fibers f2 and f3, ..., and single fibers fn-1 and fn, are connected.
(3) An optical fiber coil according to the above optical fiber coil (1) or (2) has a covering portion covering only one side of the single fibers.
(4) An optical fiber coil according to any of the above optical fiber coils (1) to (3) has the covering portion made of silicone rubber.
(5) An optical fiber coil according to any of the above optical fiber coils (1) to (4) has a connection which is fusion spliced.
(6) An optical fiber coil in a bundled state has any of the above optical fiber coils (1) to (5) bundled.
(7) An optical fiber coil in a bundled state according to the above optical fiber coils in a bundled state (6) has a portion other than the end portions of the optical fiber ribbon coated by the coating portion.
(8) A production method for an optical fiber coil of the present invention includes arranging in parallel plural of single fibers and integrally covering them with a covering portion so as to form an optical fiber ribbon, and connecting ends of the ribbon, so that an end of at least one single fiber is connected to an end of another single fiber.
(9) A production method for an optical fiber coil in a bundle state of the present invention includes arranging in parallel plural of single fibers and integrally covering them with a covering portion so as to form an optical fiber ribbon, connecting ends of the ribbon so that an end of at least one single fiber is connected to an end of another single fiber so as to form an optical fiber coil, and bundling the optical fiber coil.
(10) A production method for an optical fiber coil in a bundled state of the present invention includes arranging in parallel plural of single fibers and integrally covering them with a covering portion so as to form an optical fiber ribbon, bundling the optical fiber ribbon, and connecting ends of the ribbon so that an end of at least one single fiber is connected to an end of another single fiber.

According to the present invention, an optical fiber coil and a production method therefor can be provided in which it is not necessary that spaces between the single fibers be further widened and that stress be further applied to the single fibers, and in which time and economic costs are low.

That is, by using an optical fiber ribbon in which plural of single fibers are arranged in parallel in advance and disposing a covering portion integrally covering them thereon, spaces between the single fibers can be small and constant and stress cannot be further applied to the single fibers. In addition, winding time can be minimized or be eliminated, and the adhesive can be also be minimized or be eliminated, so that a process for applying the adhesive is minimized. Therefore, the optical fiber coil can be simply produced, and time and economic costs can be less than in conventional techniques.

Furthermore, in the optical fiber ribbon, distortion and increase of optical transmission loss due to temperature changes are small, and as a result, an optical fiber coil produced using the optical fiber ribbon is also unlikely to be affected by temperature changes, and the reliability thereof in realistic environments is also improved.

### BRIEF DESCRIPTION OF THE DRAWINGS

Fig. 1 is a side view showing an optical fiber ribbon bent in a C-shape.
Fig. 2 is an enlarged view showing the area around both ends (Y portion in Fig. 1) of an optical fiber ribbon.
Fig. 3 is a schematic drawing showing ends of an optical fiber ribbon.
Fig. 4 is a side view showing an optical fiber coil in a spirally bundled state of the present invention.
Fig. 5 is a side view showing an optical fiber coil in a bundled state with a coating portion.
Fig. 6 is a perspective view showing a winding jig.
Figs. 7A to 7C are schematic drawings showing winding using the winding jig.

### DESCRIPTION OF THE PREFERRED EMBODIMENTS

In order to solve the above₋described problems, the present inventors found that an optical fiber coil could be easily produced using an optical fiber ribbon in which many single fibers were arranged in parallel and were integrally covered by a covering portion thereon so as to be in the shape of a tape, and the present invention was thereby completed.

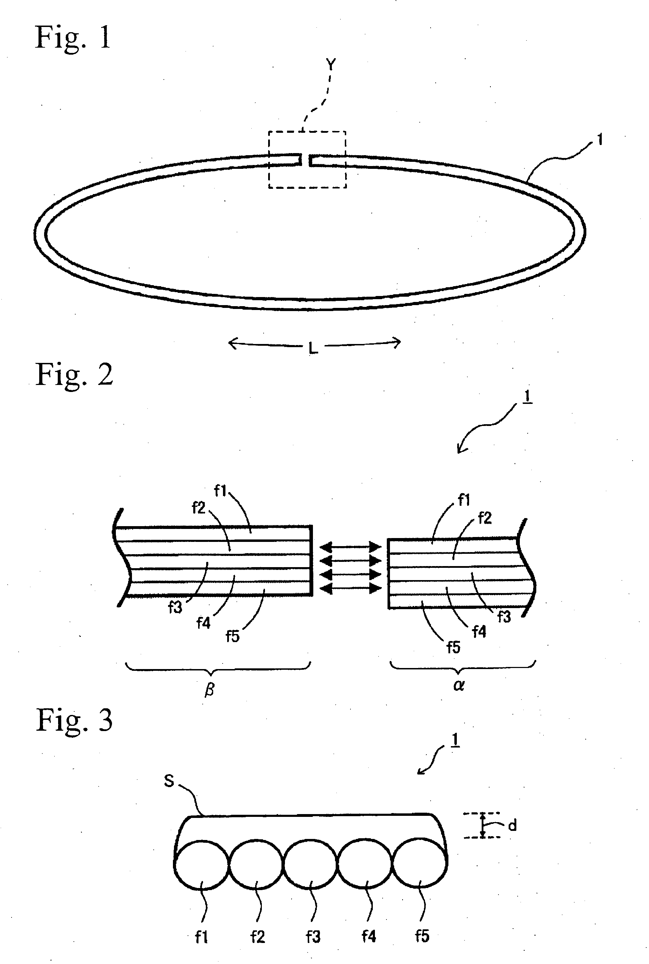

The present invention will be explained with reference to Figs. 1 to 3.

Fig. 1 is a side view showing an optical fiber ribbon bent in a C-shape having a length L with ends thereof connected at a Y portion by a construction shown in Fig. 2. Fig. 2 is an enlarged view showing the areas around both ends (Y portion in Fig. 1) of the optical fiber ribbon, and Fig. 3 is a schematic drawing showing ends of the optical fiber ribbon.

Reference numeral 1 indicates an optical fiber ribbon, reference numerals f1 to f5 indicates single fibers, reference letter S indicates a covering portion, and reference letter d indicates a thickness of the covering portion.

The optical fiber ribbon 1 functions as an optical fiber tape core, plural of single fibers (the number of the single fibers is n, and n is an integer), having length L, f1, f2, f3, ..., and fn (in the figure, n is 5) are arranged in parallel in this order, and a covering portion S is integrally covered thereon.

The covering portion S may cover both sides of the single fibers f1 to f5, or may cover only one side thereof. As shown in Fig. 3, it is preferable that only one side thereof be covered, since flexibility is superior.

It is preferable that thickness d of the covering portion be 50 to 500 µm. It is more preferable that thickness d of the covering portion be 50 to 250 µm. When the thickness is less than 50 µm, the single fibers f1 to f5 may accidentally separate, and in contrast, when it exceeds 500 µm, the flexibility is insufficient.

As a material of the coating portion S, various adhesives may be used in which thermoplastic adhesive, thermosetting adhesive, room temperature setting adhesive, ultraviolet radiation curable adhesive, electron beam curable adhesive, etc., are added to urethane resin, acrylic resin, epoxy resin, nylon resin, phenol resin, polyimide resin, vinyl resin, silicone resin, rubber resin, fluoroepoxy resin, fluoroacrylic resin, etc. For the above material of the covering portion S, the silicone resin is preferable, and silicone rubber is more preferable because of flexibility.

In the silicone rubber, it is preferable that the hardness described below be 20 to 90 and that the tensile strength be 15 to 80 kgf/cm². It is more preferable that the hardness be 25 to 75 and that the tensile strength be 15 to 60 kgf/cm², and is most preferable that the hardness be 30 to 65 and that the tensile strength be 15 to 50 kgf/cm².

In the case in which the hardness of the silicone rubber is less than 20 and the tensile strength is less than 15 kgf/cm² strength against side pressure, twisting, or the like, of the produced optical fiber ribbon 1 is insufficient, and the optical fiber ribbon 1 is easily ruptured by slight distortion during working.

In addition, in the case in which the hardness of the silicone rubber exceeds 90 and the tensile strength exceeds 80 kgf/cm², the flexibility is not sufficient and the ability to separate the single fibers f1 to f5 is insufficient.

Here, the "hardness" means "durometer hardness" measured according to a method provided by Japanese Industrial Standard K6249. That is, a test piece of silicone rubber having a thickness of 6 mm is produced, a pressing needle of a type A durometer is perpendicularly pressed at the surface of the test piece without impact, and durometer hardness is measured by reading a scale thereof. The durometer is a tester in which hardness is measured by pressed depth of the pressing needle which is pressed using a spring.

As shown in Fig. 2, both ends of the optical fiber ribbon 1, for example, an end of the single fiber f1 at an α side and an end of the single fiber f2 at a β side, an end of the single fiber f2 at an α side and an end of the single fiber f3 at a β side, ..., and an end of the single fiber fn-1 at an α side and an end of the single fiber fn at a β side, are connected, so that an end of the single fibers f1 to f4 is connected to an end of the single fibers f2 to f5 (the number of connecting points is n-1), and thereby one long optical fiber coil connected from an end of the single fiber f1 to an end of the single fiber fn, is formed. The optical fiber coil is a spiral having a large diameter, and this is one embodiment of an optical fiber coil of the present invention.

As a connection method of the ends, fusion splicing, a method using a mechanical sleeve, connector connection, or the like, can be used, and of these, the fusion splicing is preferable since optical transmission loss due to the connection is small. Furthermore, it is preferable that the connection portion be protected by a protection sleeve, etc.

In order to reduce total optical connection loss at the connecting point, it is preferable that the number n be decreased and the length L be increased.

When the number n of the single fibers in the optical fiber ribbon 1 is increased, the optical fiber length L can be shortened and an optical fiber coil having a small diameter can be produced. Here, the width of the optical fiber ribbon 1 is inevitably increased by increasing the number n of the single fibers. In the case in which the diameter of the optical fiber coil is decreased depending on the space, the length L can be decreased by increasing the number n.

As described above, the number n of the single fibers and the optical fiber length L can be properly selected by desired diameter, width, length, shape, etc., of the optical fiber coil.

In addition, it is preferable that the connection points in which the number of connection is n-1 be connected at the same time, and in the case in which the number of connections is regulated, for example, in a commercial fusion splicer, the number n may be selected according to the regulated value. For example, in the case in which the fusion splicer can be subjected to only four pairs of simultaneous connections, it is preferable that the number n be 5.

The present invention is not limited to the embodiment in which the single fiber f1 and the single fiber f2, the single fiber f2 and the single fiber f3, ..., and the single fiber fn-1 and the single fiber fn, are connected, as illustrated in Fig. 2. For example, the present invention includes also the case in which an end of the single fiber f1 at an α side and an end of the single fiber f3 at a β side, an end of the single fiber f2 at an α side and an end of the single fiber f4 at a β side, ..., and an end of the single fiber fn-2 at an α side and an end of the single fiber fn at a β side, shown in Fig. 2, are connected, so that one optical fiber coil is produced in total by connecting ends of each single fiber.

In addition, the present invention includes also the case in which an end of the single fiber f1 at an α side and an end of the single fiber f3 at a β side, an end of the single fiber f2 at an α side and an end of the single fiber f4 at a β side, ..., and an end of the single fiber fn-2 at an α side and an end of the single fiber fn at a β side, shown in Fig. 2, are connected, so that two optical fiber coils are simultaneously produced.

That is, the optical fiber coil of the present invention has an optical fiber ribbon formed by arranging in parallel plural of single fibers and by integrally covering them with a covering portion, and ends of the ribbons are connected, so that an end of at least one single fiber is connected to an end of another single fiber.

Materials of the single fibers f1 to fn which constitute the optical fiber ribbon 1 of the present invention are not particularly limited, and may be properly selected according to application, etc. For example, single fibers made of materials such as quartz, plastic, etc., or single fibers for an optical fiber amplifier which is doped with erbium, thulium, praseodymium, etc., can be used, whether for a single-mode or a multi-mode.

In addition, outside diameters of the single fibers f1 to fn, optical fiber lengths L, and the number n of single fibers which constitute the optical fiber ribbon 1, are not particularly limited.

As described above, according to the optical fiber coil of the present invention, by using an optical fiber ribbon 1 in which plural of single fibers f1 to fn are arranged in parallel in advance and a covering portion S is integrally covered thereon, spaces between the single fibers f1 to fn can be small and constant, and stress cannot be further applied to the single fibers. Additionally, adhesive which winds or fixes the optical fiber ribbon 1 is unnecessary, and time and economic costs are low.

Furthermore, in the optical fiber ribbon 1, distortion of the shape and increase of optical transmission loss due to temperature changes are small, and as a result, the optical fiber coil produced using the optical fiber ribbon is also unlikely to be affected by temperature changes, and reliability in real environments is also improved.

Next, an optical fiber coil in a bundled state of another embodiment of the present invention will be explained.

The optical fiber coil in a bundled state of the present invention has the above optical fiber coils compactly bundled, and a method for bundling the optical fiber coils is not particularly limited. For example, a method for bundling the optical fiber coils in a spiral shape or a curled shape, or the like, can be used.

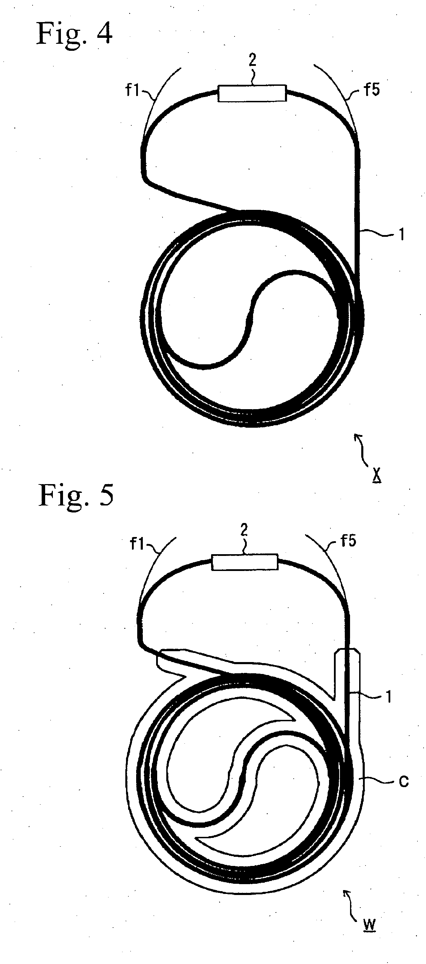

In Fig. 4, a side view of the optical fiber coil in a spirally bundled state of the present invention.

Reference numeral 2 indicates a fused portion which connects the single fibers f1 to fn by fusion, and reference letter X indicates the optical fiber coil in a bundled state of the present invention.

Although the fused portion 2 is difficult to wind since it is cured by fusion, the optical fiber coil X is sufficiently compact.

In Fig. 4, an aspect in which the single fibers f1 and f5 are separated from the optical fiber ribbon 1 is shown. The optical fiber coil X can be used as an optical fiber transmission passage by connecting the single fibers f1 and f5 with other devices.

As described above, according to the optical fiber coil X in a bundled state of the present invention, the optical fiber coils having large diameter shown in Fig. 1 can be compactly bundled.

In addition, as shown in Fig. 5, in the optical fiber coil in a bundled state, a portion other than the end portions of the optical fiber ribbon may be coated by the coating portion.

Reference letter C indicates the coating portion and reference letter W indicates the optical fiber coil in a bundled state with the coating portion C.

In the coating portion C, well-known resins can also be used in addition to rubber materials such as silicone rubber, naphtha rubber, butyl rubber, or the like, and of these, a rubber material is preferable since stress is difficult to apply to the optical fiber ribbon 11 and expansion and shrinkage due to changes in the environment are small. In addition, various properties such as fire resistance, heat resistance, insulation, etc., can be added by using material having various properties.

By coating with the coating portion C, the coil shape is fixed and change of the optical transmission loss can be decreased.

Next, a production method for the optical fiber coil of the present invention will be explained.

The production method for the optical fiber coil of the present invention includes arranging in parallel plural of single fibers f1 to fn and integrally covering them with covering portion S, so as to form an optical fiber ribbon 1, and connecting ends of the ribbon, so that an end of at least one single fiber is connected to an end of another single fiber.

First, the optical fiber ribbon 1 is formed by arranging in parallel plural of the single fibers f1 to fn and by integrally covering them with the covering portion S.

The covering method is not limited to specific methods, and in the present invention, a method in which covering material is applied to plural of single fibers arranged in a plane, and it is molded using a molding jig, as in, for example, a method disclosed in Japanese Unexamined Patent Application Publication No. 2004-240152, or the like, can be preferably used.

Then, ends of the ribbons 1 are connected by a method using a fusion splicer or a mechanical sleeve, or by a connector joint, so that an end of at least one single fiber is connected to an end of another single fiber.

As described above, the optical fiber coil of the present invention is produced.

Next, a production method for the optical fiber coil in a bundled state of the present invention will be explained.

The production method for the optical fiber coil in a bundled state of the present invention further includes bundling the above optical fiber coil.

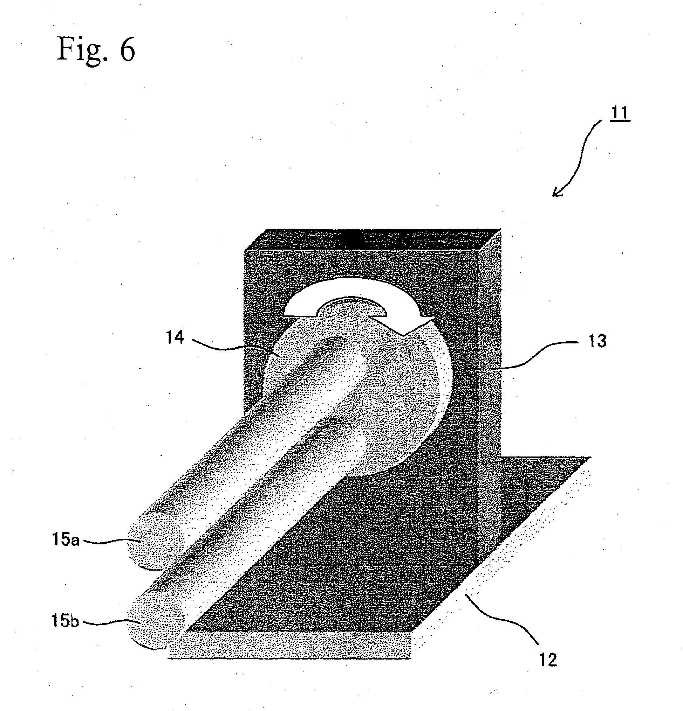

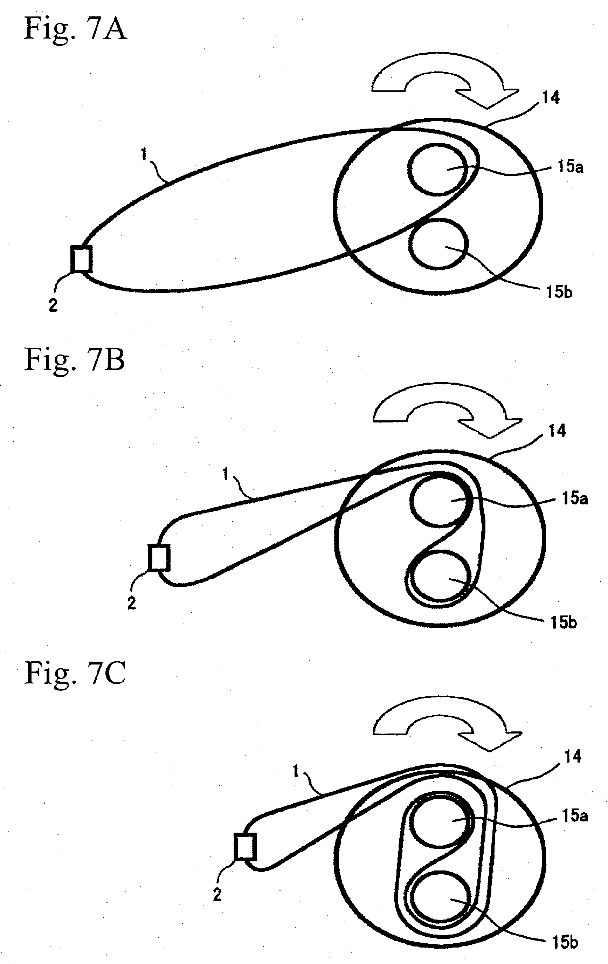

When the optical fiber coil is bound, bobbins, and winding jigs illustrated in Figs. 6 and 7, or the like, are preferable since the optical fiber ribbon 1 can be compactly bundled without remaining clearance. However, it is necessary to adjust the load so that optical transmission loss is not generated by bending the optical fiber ribbon 1 at a sharp angle.

The case in which a winding jig 11 is used will be explained using Figs. 6 and 7.

Fig. 6 is a perspective view showing a winding jig, and Figs. 7A to 7C are schematic drawings showing winding using the winding jig. In Fig. 7, a base plate 12 and a vertical plate 13 are omitted.

In Figs. 6 and 7, reference numeral 11 indicates a winding jig, reference numeral 12 indicates a base plate, reference numeral 13 indicates a vertical plate, reference numeral 14 indicates a rotating plate, reference numerals 15a and 15b indicate winding shafts which are integrated with the rotating plate 14, and an outline arrow indicates a rotating direction of the rotating plate 14.

In the winding jig 11 shown in Fig. 6, a vertical plate 13 is connected to a base plate 12, and a circular rotating plate 14 is rotatably installed on the vertical plate 13, so that the rotating plate 14 rotates around the center thereof which is a rotation axis.

The rotating plate 14 has two winding shafts 15a and 15b (for example, made of stainless steel with a diameter of 30 mm) which run parallel to the rotation axis (the center axis is perpendicular to the rotating plate 14). Midpoints of the two winding shafts 15a and 15b are rotation axes.

It is preferable that the optical fiber coil in a bundled state of the present invention be produced by carrying out a process shown in Figs. 7A to 7C, using a winding jig 11 shown in Fig. 6. That is, as shown in Fig. 7A, a portion which is farthest away from a fusion portion 2 of the optical fiber coil is placed and fixed so as to hook at a winding shaft 15a, and then a rotating plate 14 is rotated while stress is applied to the optical fiber coil (in the figure, clockwise rotation). Since in the optical fiber coil, the single fibers f1 to f5 are integrated, the stress is dispersed, and it is unusual for the single fibers to be subjected to large stresses.

Next, as shown in Figs. 7B and 7C, the optical fiber coil is wound with the rotation, and it is bundled in a desired shape such as a spiral shape, a curled shape, etc., (in the figure, a spiral shape). Thus, the optical fiber coil X in a bundled state which retains the fused portion 2 can be produced.

In the case in which the optical fiber coil in a bundled state is produced using a bobbin, bundling can be carried out by the same method.

As a bobbin used in bundling, bobbins made of metals such as iron, aluminum, etc., plastics, glass, or the like, can be used. Bobbins made of metal, glass, plastic mixed with glass fiber or filler, etc., are preferable, since dimensional changes due to temperature changes or humidity changes are small. In addition, the size of the bobbin is not limited and can be selected depending on flexibility of the optical fiber or installation space of the bobbin.

When the optical fiber ribbons 1 are bundled, a method in which the optical fiber ribbons 1 are fixed by applying adhesive and by adhering proximate optical fiber ribbons 1, may be used. As the adhesive, any adhesives having adhesive strength in which a coil shape of a wound optical fiber ribbon 1 can be maintained against tension generated by winding of the ribbon, can be used. For example, various adhesives can be used in which thermoplastic adhesive, thermosetting adhesive, room temperature setting adhesive, ultraviolet radiation curable adhesive, electron beam curable adhesive, etc., are added to urethane resin, acrylic resin, epoxy resin, nylon resin, phenol resin, polyimide resin, vinyl resin, silicone resin, rubber resin, fluoroepoxy resin, fluoroacrylic resin, etc. In the present invention, since it is not necessary to adhere each of the single fibers f1 to f5, the amount of the adhesive used can be decreased and a process for applying the adhesive is minimized.

In addition, the order of the processes may be changed.

That is, the optical fiber ribbon is produced by arranging in parallel plural of single fibers and by integrally covering them with the covering portion S, and the optical fiber ribbons are bundled, and ends of the ribbons are connected, so that an end of at least one single fiber is connected to an end of another single fiber.

Furthermore, a portion other than the ends of the optical fiber ribbon may be immersed in liquid rubber, resin, etc., and be pulled out, dried, and cured, and thereby, the coating portion C which covers the optical fiber coil is formed.

It is not essential that the coating portion C be formed. However, it is preferable that the coating portion C be formed, since resistance to stress is extremely superior.

Formation of the coating portion C may be carried out properly after the optical fiber coils are bundled or the optical fiber ribbons are bundled.

As described above, according to the production method for the optical fiber coil of the present invention and the production method for the optical fiber coil in a bundled state of the present invention, in comparison with conventional methods in which one long single fiber is wound onto a bobbin or the like using adhesive, winding time can be minimized or eliminated, and the adhesive can be also be minimized or eliminated, so that a process for applying the adhesive is decreased. Therefore, the optical fiber coil can be simply produced, and time and economic costs can be lower than in conventional techniques.

### EXAMPLES

### Example 1

As single fibers f1 to f5, five single fiber cables having a length of 1.1 meters were used.

The single fibers f1 to f5 (quartz single-mode optical fiber, outer diameter 0.25 mm, produced by Furukawa Electric Co., Ltd.) were arranged in parallel and were covered on one side thereof by a covering portion S, and thereby an optical fiber ribbon 1 was produced.

The covering portion S was room-temperature-setting silicone rubber (trade name: TSE392, hardness of 26, tensile strength of 16 kgf/cm², produced by GE Toshiba Silicones Ltd.). Thickness d of the covering portion was 100 µm.

A production method for the optical fiber ribbon 1 having one covered side which was made from the single fibers f1 to f5, was as follows. The room-temperature-setting silicone rubber before curing, which was covering material, was applied on the single fibers f1 to f5 arranged in a plane, and then the covering material was molded using a molding jig and was cured by drying.

The coating material covered on the single fibers f1 to f4 and coating of the single fibers f1 to f4 were removed in a range from an end of the optical fiber ribbon 1 to a position 3 cm away from the end, using a hot stripper.

At the same time, the coating material covered on the single fibers f2 to f5 and coating of the single fibers f2 to f5 were removed in a range from the other end of the optical fiber ribbon 1 to a position 3 cm away from the end, using a hot stripper.

Therefore, in these regions, the single fibers were optical fiber wires without the covering.

Only 1 cm of the tips of 4 pairs of the single fibers which were optical fiber wires (f1 and f2, f2 and f3, f3 and f4, and f4 and f5) were cut by an optical fiber cutter. Each end of four pairs of the cores was connected using a four-pair simultaneous-connecting type of fusion splicer, so as to form fused portion 2. The fused portion was protected by a protection sleeve which was heat shrinkable:

As described above, an optical fiber coil of Example 1 having a length of about 5.4 m was produced.

Since in the optical fiber coil of Example 1, the optical fiber ribbon 1 was constituted by integrating the single fibers f1 to f5, it was not necessary that spaces between the single fibers be further widened and that stress be further applied to the single fibers. Therefore, the optical fiber coil of Example 1 did not have problems in practical use. In addition, in the optical fiber coil of Example 1, it was not necessary to wind the cores and apply adhesive, and time and economic costs were less than in conventional techniques.

### Example 2

Next, an optical fiber coil in a bundled state of Example 2 will be explained.

The optical fiber coils produced in Example 1 were spirally bundled using the above-mentioned winding jig 11, and an optical fiber coil in a bundled state of Example 2 was produced.

When the optical fiber coils were bundled, an ultraviolet radiation curable adhesive (trade name: viscotack PM-654, produced by Osaka Organic Chemical Industry Ltd.) was applied in advance between the optical fiber coils using a dispenser and was wound, and then it was subjected to an ultraviolet radiation curing (irradiation strength of 20 mW/cm², irradiation time of 2 minutes) by an ultraviolet irradiation device.

This optical fiber coil X in a bundled state was constructed of one optical fiber coil in which the length from an end of the optical fiber f1 to an end of the optical fiber f5 was about 5.4 m, and optical transmission loss thereof was about 0.8 dB.

Since in the optical fiber coil in a bundled state of Example 2, the optical fiber ribbon 1 was constituted by integrating the single fibers f1 to f5, it was not necessary that spaces between the single fibers be further widened and that stress be further applied to the single fibers. Therefore, the optical fiber coil of Example 2 in a bundled state did not have problems in practical use. In addition, since the optical fiber coil of Example 2 was bundled, it was compact in spite of having a length of about 5.4 m. In the production, since the optical fiber ribbon 1 in which the single fibers f1 to f5 were integrated already was wound, winding time was short and with respect to the adhesive, since the optical fiber ribbon 1 was adhered itself by applying adhesive in advance, production processes were minimized. Therefore, in the optical fiber coil in a bundled state of Example 2, time and economic costs were lower than in conventional techniques.

### Example 3

Next, an optical fiber coil in a bundled state of Example 3 will be explained.

With respect to the optical fiber coil in a bundled state produced in Example 2, a portion other than the end portions of the optical fiber ribbon was immersed in liquid silicone rubber (trade name: SE 9189 L, produced by Dow Coming Toray Co., Ltd.). The optical fiber coil was pulled out, was dried, and was cured. Therefore, an optical fiber coil W in a bundled state of Example 3 was produced.

The optical fiber coil W in a bundled state was constructed of one optical fiber coil in which a length from an end of the optical fiber f1 to an end of the optical fiber f5 was about 5.4 m.

Furthermore, the optical fiber coil W in a bundled state of Example 3 was extremely superior in durability against stress.

## Claims

1. An optical fiber coil comprising:
an optical fiber ribbon having ends, comprising:
plural of single fibers arranged in parallel; and
a covering portion integrally covering the single fibers,
wherein the ends of the ribbon are connected so that an end of at least one single fiber is connected to an end of another single fiber.

2. An optical fiber coil comprising:
an optical fiber ribbon having ends, comprising:
plural of single fibers f1, f2, f3, ..., and fn in this order; arranged in parallel; and
a covering portion integrally covering the single fibers,
wherein the ends of the ribbon are connected so that single fibers f1 and f2, f2 and f3, ..., and fn-1 and fn, are connected.

3. An optical fiber coil according to claim 1 or 2, wherein the covering portion covers only one side of the single fibers.

4. An optical fiber coil according to any one of claims 1 to 3, wherein the covering portion is made of silicone rubber.

5. An optical fiber coil according to claim 1 or 2, wherein the connection is fusion spliced.

6. An optical fiber coil in a bundled state, wherein the optical fiber coil according to any one of claims 1 to 5 is bundled.

7. An optical fiber coil in a bundled state according to claim 6, wherein a portion other than the end portions of the optical fiber ribbon is coated by the coating portion.

8. A production method for an optical fiber coil, comprising:
arranging in parallel plural of single fibers and integrally covering the single fibers with a covering portion so as to form an optical fiber ribbon; and
connecting ends of the ribbon so that an end of at least one single fiber is connected to an end of another single fiber.

9. A production method for an optical fiber coil in a bundled state, comprising:
arranging in parallel plural of single fibers and integrally covering the single fibers with a covering portion so as to form an optical fiber ribbon;
connecting both ends of the ribbon so that an end of at least one single fiber is connected to an end of another single fiber so as to form an optical fiber coil; and
bundling the optical fiber coil.

10. A production method for an optical fiber coil in a bundled state, comprising:
arranging in parallel plural of single fibers and integrally covering the single fibers with a covering portion so as to form an optical fiber ribbon;
bundling the optical fiber ribbon; and
connecting both ends of the ribbon so that an end of at least one single fiber is connected to an end of another single fiber.
